# EUROPEAN PATENT APPLICATION

(11) **EP 2 266 933 A1**
(43) Date of publication of application: **29.12.2010**
(21) Application number: 09175940.7
(22) Date of filing: 13.11.2009
(51) Int. Cl.: C04B 35/465, C04B 35/628

(54) **Sintered material for dielectric substance and process for preparing the same**

(30) Priority: 12.06.2009 KR 20090052239
(71) Applicant: SNU R&DB Foundation, Gwanak-gu Seoul 151-015 (KR)
(72) Inventor: YOO, Sang-Im, Seoul (KR); KIM, Young-Mi, Gyeongsangnam-do (KR); SHIN, Goe-Myung, Seoul (KR); LEE, Sung-Yun, Seoul (KR)
(74) Representative: Ferreccio, Rinaldo

(57) **Abstract**

The present invention relates to a sintered material for a dielectric substance and a process for preparing the same. Particularly, the present invention is directed to a sintered material for a dielectric substance comprising a core-shell microstructure including a core of a first material and a shell of a second material, wherein a relative dielectric constant of said first material is larger that a relative dielectric constant of said second material.

## Description

### Field of the Invention

The present invention relates to a sintered material for a dielectric substance and a process for preparing the same. Particularly, the present invention is directed to a sintered material for a dielectric substance comprising a core-shell microstructure including a core of a first material and a shell of' a second material, wherein a relative dielectric constant of said first material is larger than that of said second material.

### Backgroud of the Invention

Recently, several studies for making a high capacitance and thinning of multi-layer ceramic capacitors are rapidly in progress in accordance with the trends of miniaturization and high performance of electronic apparatuses. Consequently, reliability of physical properties of dielectric substances used for such electronic devices, such as DC-bias under a high electric field, capacitance variation with temperature change, and etc., has been watched with keen interest.

Presently, BaTiO₃ (hereinafter, also referred to as "BTO") with Perovskite structure is widely used as a dielectric substance with a high dielectiricity. However, the relative dielectric constant of BTO considerably decreases when DC-bias is supplied for BTO. Various technologies for reducing the size of BTO crystalline particles have been studied and developed in order to solve such decrease in the relative dielectric constant of BTO. In spite of the above endeavors, such trials for reducing the size of BTO crystalline particles have rather resulted in reducing the dielectric constant of BTO and affecting adversely the capacitance variation characteristic of BTO with temperature.

Meanwhile, a dielectric substance of BTO produced by the conventional technologies has a large dielectric constant of more than 4,000, due to the atomic fluctuation of BTO which results from phase transitions of the atoms with temperature. However, the conventional BTO dielectric material has a **characteristic in that** its relative dielectric constant considerably changes due to such atomic fluctuation.

Recently, (Ba₁₋ₓCaₓ)TiO₃ (hereinafter, also referred to as "BCT") dielectric materials which result from the solid-solution of Ca into part of 'A' sites of BaTiO₃ have developed (JP patent application publication Nos. 2003-277136 and 2004-079686).

However, those prior arts have a disadvantage that total volume of BCT decreases with decrease of atomic fluctuations of BTC due to increase in the amount of Ca substitution for the Ba site and, therefore, the relative dielectric constant of BTC decreases. Moreover, deterioration of the electrical property of BCT is caused by abnormal grain growth due to migration of Ca during a chip firing process since Ca substitutes the Ba site of BaTiO₃, Therefore, it is necessary to use a firing profile and atmosphere to overcome these problems and, for this, large amount of facility investment is to be required.

As such, although BTO has a high dielectric constant, it has a disadvantage in that the change in DC-bias characteristic of BTC is considerable. In addition, although the DC-bias characteristic of BTC improves, the relative dielectric constant of BTO significantly decreases.

Korean patent application No. 10-2005-0033009 discloses a dielectric ceramic composition comprising BaTiO₃ and (Ba₁₋ₓCaₓ)TiO₃ as main components and a multi-layer ceramic capacitor using the dielectric ceramic composition.

However, since BaTiO₃ undergoes a phase transition at about 120□, BaTiO₃ depends greatly on temperature. Further, since the tetragonality (c/a), the ratio of c axis to a axis in a crystal lattice, of BaTiO₃ should be kept large, various compounds such as magnesium compounds or chromium compounds, yttrium compounds or RE compounds (RE: a rare earth element), manganese compounds or chromium compounds or vanadium compounds, silicon compounds, etc. should be incorporated into BaTiO₃. Therefore, the process for producing the capacitor according to the Korean patent application No. 10-2005-0033009 is very complicated and it is strongly required to develop a process for preparing a dielectric substance with better properties than this capacitor.

As such researches, Deschanvres et al., Bull. Soc. Chim. Fr. 4077 (1967) report the preparation of CaCu₃Ti₄O₁₂ with the perovskite structure and a lattice constant of 0.7393 nm.

In addition, Boche et al., J. Solid State Chem. 29, 291 (1979) report the synthesis and structure of CaCu₃Ti₄O₁₂ and related titanates and report the lattice constant to be 0.7391 nm.

Moreover, Yandrofski et al., U.S. Patent No. 5,472,935, disclose tuneable microwave and millimeter wave devices incorporating tuneable ferroelectrics.

Furthermore, PCT/US2001/014297 discloses a tuneable devices incorporating CaCu₃Ti₄O₁₂ (CCTO). PCT/US2001/014297 describes that CaCu₃Ti₄O₁₂ is useful in tuneable devices which exhibits minimal frequency dependence. Neverthless, CaCu₃Ti₄O₁₂ which has a dielectric constant above 9,000 over a frequency range of 1 kHz to 1 MHz is disadvantageous in that it has a large dielectric loss over a frequency range of more than 100 kHz and, also, its dielectric properties fall down under direct and alternative voltages. Therefore, the tuneable devices of PCT/US2001/014297 have not yet been commercialized.

In order to overcome the disadvantages of the prior arts, CaCu₃Ti₄O₁₂ which is a high dielectric material with a relative dielectric constant of more than 10⁵ (εᵣ > 10⁵) at room temperature and 100 Hz is being actively researched. The relative dielectric constant of CaCu₃Ti₄O₁₂ is much higher than those of other dielectric materials. CaCu₃Ti₄O₁₂ can be used for MLCC (multi-layer ceramic capacitor) and others which require a high dielectric material.

However, CaCu₃Ti₄O₁₂ has not yet been commercialized as a dielectric substance over a certain frequency band since the dielectric loss of conventional CaCu₃Ti₄O₁₂ dielectric substances significantly increases over a frequency range of more than 100 kHz. It is also a disadvantage that the relative dielectric constant of CaCu₃Ti₄O₁₂ (DC-bias) considerably decreases by supplying a DC field and an AC field.

In order to solve such disadvantages, a variety of efforts, such as the addition of MnO₂, ZrO₂, SiO₂ and the like to CaCu₃Ti₄O₁₂, the adjustment of Cu contents in CaCu₃Ti₄O₁₂, etc., has been attempted. Also, different methods for preparing CaCu₃Ti₄O₁₂ dielectric material, such as a solid-state sintering process, a microwave synthesis, a sol-gel synthesis, etc., have recently been tried in order to improve the dielectric properties of CaCu₃Ti₄O₁₂.

However, a dielectric material that reduces the dielectric loss of CaCu₃Ti₄O₁₂, the high dielectric material, over a braod frequency range with maintaining the high dielectric constant of CaCu₃Ti₄O₁₂, has not yet been achieved.

The present inventors, in order to overcome the disadvantages of' the prior arts, have invented a sintered material for a dielectric substance comprising a core-shell microstructure including a core of a first material, for example CaCu₃Ti₄O₁₂, SrCu₃Ti₄O₁₂, BaCu₃Ti₄O₁₂, NiO doped with Li and Ti or the like, NiO doped with Li and Al or the like, CuO, or RE_{1-y}A˙_{y}NiO₄ (RE = La, Pr, Nd, Sm, Eu, Gd or Ce; A' = Ca, Sr or Ba; and 0<y<2), etc., and a shell of a second material, for example, perovskite-type materials which has the lower dielectric constant and dielectric loss than the first material, such as CaTiO₃, SrTiO₃, BaTiO₃, MgTiO₃, etc., or single metal oxides such as Al₂O₃, TiO₂, MgO, CaO, SrO, BaO, HfO₂, etc., wherein a relative dielectric constant of the first material is larger than a relative dielectric constant of the second material, and a process for preparing the same.

### Summary of the Invention

The primary object of the present invention is to provide a sintered material for a dielectric substance, comprising a dispersed phase of one selected from the group consisting of NiO doped with Li and Ti, NiO doped with Li and Al, CuO, ACu₃Ti₄O₁₂ with Perovskite structure and RE_{2-y}A˙_{y}NiO₄, and a continuous phase of a sintering aid, wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}; 0<x<1; RE is La, Pr, Nd, Sm, Eu, Gd or Ce; A is Ca, Sr or Ba; and 0<y<2.

Another object of the present invention is to provide a process for preparing a sintered material for a dielectric substance, comprising sintering a mixture of a powder selected from the group consisting of NiO doped with Li and Ti, NiO doped' with Li and Al, CuO, ACu₃Ti₄O₁₂ with Perovskite structure and RE_{2-y}A˙_{y}NiO₄, and a powder of a sintering aid, wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}; 0<x<1; RE is La, Pr, Nd, Sm, Eu, Gd or Ce; A⁻ is Ca, Sr or Ba; and 0<y<2.

Further object of' the present invention is to provide a sintered material for a dielectric substance, comprising a core-shell microstructure including a core of a first material and a shell of' a second material, wherein a relative dielectric constant of the first material is larger than that of the second material.

Yet another object of the present invention is to provide a process for preparing a sintered material for a dielectric substance, which has a core-shell microstructure, comprising: i) mixing a powder of a first material and a coating composition to coat the powder of the first material; ii) drying a mixture obtained from the step i); iii) calcinating the dried mixture of the step ii) to form a shell of a second material on a core of the first material; and iv) sintering the precursor powder for sintering obtained from the step iii).

### Brief Description of the Drawings

Fig. 1 shows the dielectric properties of the sintered materials prepared in Example 1 of the present invention.
Fig. 2 shows the leakage current and resistivity under the DC field of the sintered materials prepared in Example 1 of the present invention.
Fig. 3 shows the dielectric properties of the sintered materials prepared in Example 2 of the present invention.
Fig. 4 illustrates the leakage current and resistivity under the DC field of the sintered materials prepared in Example 2 of the present invention.
Fig. 5 illustrates the relative dielectric constant and relative dielectric loss with frequency of the sintered materials prepared in Example 3 of the present invention.
Fig. 6 illustrates the relative dielectric constant and relative dielectric loss with frequency of the sintered materials prepared in Example 4 of the present invention.
Fig. 7 shows the relative dielectric constant and relative dielectric loss with frequency of the sintered materials prepared in Example 5 of the present invention.
Fig. 8 shows the relative dielectric constant and relative dielectric loss with frequency of the sintered materials prepared in Example 6 of the present invention.
Fig. 9 shows the relative dielectric constant and relative dielectric loss with frequency of the sintered materials prepared in Example 7 of the present invention.
Fig. 10 shows the relative dielectric constant and relative dielectric loss with frequency of the sintered materials prepared in Example 8 of the present invention.
Fig. 11 shows the relative dielectric constant and relative dielectric loss with frequency of the sintered materials prepared in Example 9 of the present invention.
Fig. 12 illustrates TEM images of the sintered materials prepared in Example 3 of the present invention.

### Detailed Description of the Invention

The above-mentioned primary object of the present invention may be achieved by providing a sintered material for a dielectric substance, comprising a dispersed phase of one selected from the group consisting of NiO doped with Li and Ti, NiO doped with Li and Al, CuO, ACu₃Ti₄O₁₂ with Perovskite structure and RE_{2-y}A⁻_{y}NiO₄, and a continuous phase of a sintering aid, wherein A is Ca, Sr, Ca₁₋ₓSrₓ, Sr₁₋ₓBaₓ, Ca₁₋ₓBaₓ, Sic_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2,} Na_{1/2}Y_{1/2} or Na_{1/2}Bi_{1/2}; 0<x<1; RE is La, Pr, Nd, Sm, Eu, Gd or Ce; A⁻ is Ca, Sr or Ba; and 0<y<2.

The sintering aid may be glass, and the glass may be preferably BaO-B₂O₃-SiO₂.

The another object of the present invention can be achieved by providing a process for preparing a sintered material for a dielectric substance, comprising sintering a mixture of a powder selected from the group consisting of NiO doped with Li and Ti, NiO doped with Li and Al, CuO, ACu₃Ti₄O₁₂ with Perovskite structure and RE_{2-y}A⁻_{y}NiO₄, and a powder of a sintering aid, wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2,} Na_{1/2}Yb_{1/2}, Na_{1/2}Y_{1/2} or Na_{1/2}Bi_{1/2}; 0<x<1; RE is La, Pr, Nd, S, Eu, Gd or Ce; A" is Ca, Sr or Ba; and 0<y<2.

The sintering aid may be glass, and the glass may be preferably BaO-B₂O₃-SiO₂.

The sintering temperature of the process for preparing a sintered material for a dielectric substance, of the present invention, may be preferably 900□ to 1,200□.

The further object of the present invention can be achieved by providing a sintered material for a dielectric substance, comprising a core-shell microstructure including a core of a first material and a shell of a second material, wherein a relative dielectric constant of the first material is larger than that of the second material.

The difference between the relative dielectric constant of the first material and the relative dielectric constant of the second material, which are included in the sintered material for a dielectric substance, comprising a core-shell microstructure, of the present invention, is preferably equal to or more than 1,000, more preferably equal to or more than 3,000, and most preferably equal to or more than 5,000, at 25□.

The first material may be selected from the group consisting of NiO doped with Li and Ti, NiO doped with Li and Al, CuO, ACu₃Ti₄O₁₂ with Perovskite structure and RE_{2-y}A⁻_{y}NiO₄, wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2}; 0<x<1; RE is La, Pr, Nd, Sm, Eu, Gd or Ce; A⁻ is Ca, Sr or Ba; and 0<y<2.

The second material may be selected from the group consisting of A⁻TiO₃, Al₂O₃, HfO₂, TiO₂, MgO, SiO₂ and LaLuO₃, wherein A⁻ is Mg, Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ or Ca₁₋ₓBaₓ; and 0<x<1.

In addition, the shell of the sintered material for a dielectric substance, comprising a core-shell microstructure, of the present invention, may further comprise a sintering aid. The sintering aid may be glass, and the glass may be preferably BaO-B₂O₃-SiO₂.

The yet another object of the present invention can be achieved by providing a process for preparing a sintered material for a dielectric substance, which has a core-shell microstructure, comprising: i) mixing a powder of a first material and a coating composition to coat the powder of the first material; ii) drying a mixture obtained from the step i); iii) calcinating the dried mixture of the step ii) to form a shell of a second material on a core of the first material; and iv) sintering the precursor powder for sintering obtained from the step iii).

The first material may be selected from the group consisting of NiO doped with Li and Ti, NiO doped with Li and Al, CuO, ACu₃Ti₄O₁₂ with Perovskite structure and RE_{2-y}A⁻_{y}NiO₄, wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2,} Na_{1/2}Dy_{1/2}, Na_{1/2}Yb_{1/2}, Na_{1/2}Y_{1/2} or Na_{1/2}Bi_{1/2}; 0<x<1; RE is La, Pr, Nd, Sm, Eu, Gd or Ce; A⁻ is Ca, Sr or Ba; and 0<y<2.

When the shell is made of A TiO₃, the coating composition may be a mixture of titanium isopropoxide and at least one selected from Mg(CH₃COO)₂, Ca(CH₃COO)₂, Sr(CH₃COO)₂, Ba(CH₃COO)₂, Mg(C₅H₇O₂)₂, Ca(C₅H₇O₂)₂, Sr(C₅H₇O₂)₂ and Ba(C₅H₇O₂)₂, wherein A is Ca, Sr, Ba, Mg₁₋ₓCaₓ, Mg₁₋ₓSrₓ, Mg₁₋ₓBaₓ, Ca₁₋ₓSrₓ, Sr₁₋ₓBaₓ; or Ca₁₋ₓBaₓ; and 0 < x < 1.

In addition, when the shell is made of a single-metal oxide excluding TiO₂, the coating composition may be a mixture of' ethanol and at least one selected from Mg(CH₃COO)₂, Ca(CH₃COO)₂, Sr(CH₃COO)₂, Ba(CH₃COO)₂, HfCl₄ and Al(CH₃COO)₂

Furthermore, when said shell is made of TiO₂, the coating composition may be a mixture of titanium isopropoxide and ethanol.

The precursor powder for sintering may further comprise a sintering aid in the step iv) of the process for preparing a sintered material for a dielectric substance, which has a core-shell microstructure, according to the present invention. The sintering aid may be glass, and the glass may be preferably BaO-B₂O₃-SiO₂.

According to the process for preparing a sintered material for a dielectric substance, which has a core-shell microstructure, the drying of said step ii) may be carried out by drying the mixture obtained from the step i) through heating the mixture at 80□ to 100□. In addition, the drying of the step ii) may be preferably carried out by a spray drying.

According to the process for preparing a sintered material for a dielectric substance, which has a core-shell microstructure, the temperature of calcinating of the step iii) may be preferably between 1,000□ to 1,150□. Moreover, the temperature of sintering of the step iv) may be preferably between 900□ to 1,200□

### Advantageous Effects

As described above, the electrical properties with frequency and the electrical properties under a DC or AC current supply, of the sintered material for a dielectric substance according to the present invention are better than those of the conventional sintered materials.

In addition, the sintered material for a dielectric substance of the present invention has a better dielectric constant than BaTiO₃ of which dielectric constant is higher than that of any other conventional dielectric substances that have been used up to now.

### Best Mode for Carrying Out the Invention

Hereinafter, the present invention will be described in greater detail with reference to the following examples and drawings. The examples and drawings are given only for illustration of the present invention and not to be limiting the present invention.

### Example 1. Preparation of CaCu₃Ti₄O₁₂ powders and a sintered material of CaCu₃Ti₄O₁₂ with glass phase added

Powders of CaCO₃, CuO and TiO₂ with a mole ratio of 1:3:4 were added into a polyethylene container with zirconia balls therein and mixed with addition of anhydrous ethanol, and then were ball-milled. The solvent was evaporated from the slurry thus obtained. The dried powders were ground and sieved, and then heated up to 950□ at a rate of 5 □/min under air, followed by calcination at 950□ for 24 hours.

Then, in order to improve electrical properties of grain boundary, BBS (BaO-B₂O₃-SiO₂) glass as a sintering aid was added to the calcined powders to form ceramics. The BBS glass was prepared by ball-milling the mixture of BaCO₃, H₃BO₃ and SiO₂ with a weight ratio of 30:60: 10 in a polyethylene container including zirconia balls for 6 hours. The mixed powders were ground and sieved, and heated in a platinum crucible at 1,300 for 3 hours, and then were quenched to room temperature. The glass thus prepared was ground and sieved again, and then added to CCTO powders so as to be 1 wt% and 3 wt% with respect to the total weight, respectively. The mixture powders were formed as a disk-shape through uniaxial pressing, followed by cold isostatic pressing at 150 MPa. The samples thus prepared were introduced into a heat treatment furnace and, after the furnace was heated up to 1,080□ at a rate of 5 □/min, were sintered at this temperature for 24 hours.

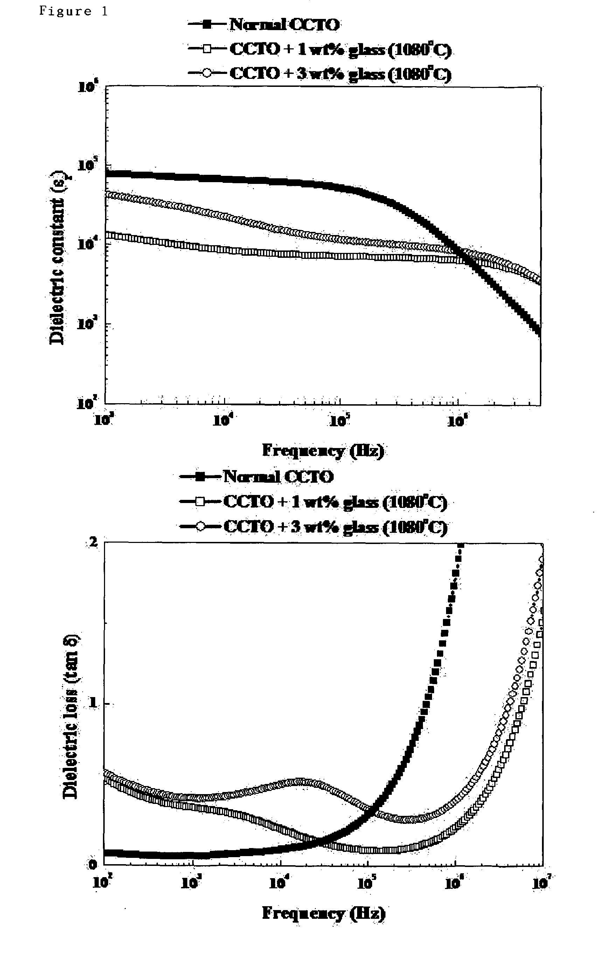

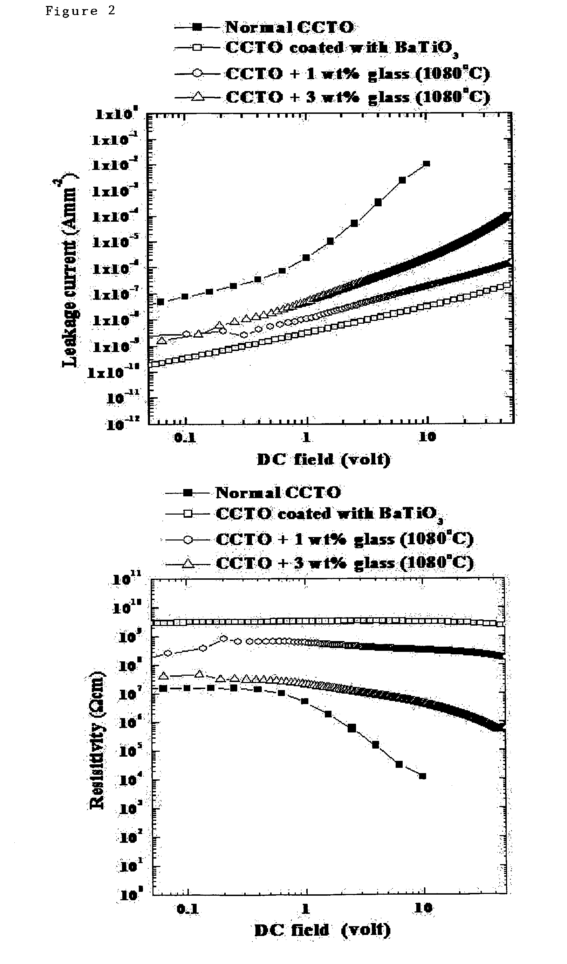

Fig. 1 illustrates the dielectric properties of' the samples and Fig. 2 shows the leakage current and resistivity with frequency of the samples.

### Example 2. Preparation of core-shell structured CaCu₃Ti₄O₁₂-BaTiO₃ and a sintered material made of core-shell structured CaCu₃Ti₄O₁₂-BaTiO₃ with glass phase added

0.205 ml of Ti[OCH(CH₃)₂]₄ and 0.22 ml of acetylacetone (C₅H₈O₂) were added into a beaker. 0.175 g of (C₂H₃O₂)₂Ba solution was added into the beaker and then the mixture was stirred with addition of 100 ml of acetic acid until the (C₂H₃O₂)₂Ba was completely dissolved, followed by stirring with addition of 10 g of' CaCu₃Ti₄O₁₂ powder for about 1 hour. Then, the mixture solution was stirred at 80 rpm to 200 rpm until the acetic acid was completely evaporated. The thus obtained dried powders in alumina crucibles were introduced into an electric furnace and heated up to at a rate of 1.5 □/min, followed by heat treatment at 1,100□ for 12 hours.

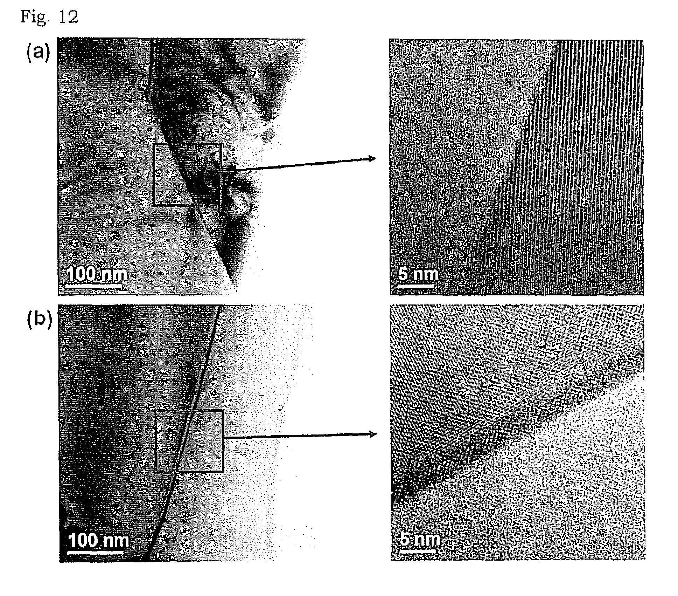

The heat-treated powders were ground in a mortar and sieved, and then were added by the glass prepared in Example 1 so as for the glass concentrations to be 1 wt% and 3 wt%, respectively, followed by sintering in order to measure the electrical properties. The sintering procedure was carried out by adding 1.2 g of the powders into a disk-shaped 15Φ (i.e., diameter of 15 mm) mold, and then usniaxially pressing thereof, followed by cold isostatic press at 150 MPa. The thus obtained compacts were heated up to 1,100□ in an electric furnace at a rate of 5 □/min and, then, were sintered at 1,100□. The TEM images of the thus prepared sintered materials are shown in Fig. 12. Referring to Fig. 12, it can be found out that a CCTO core and a BTO shell were formed.

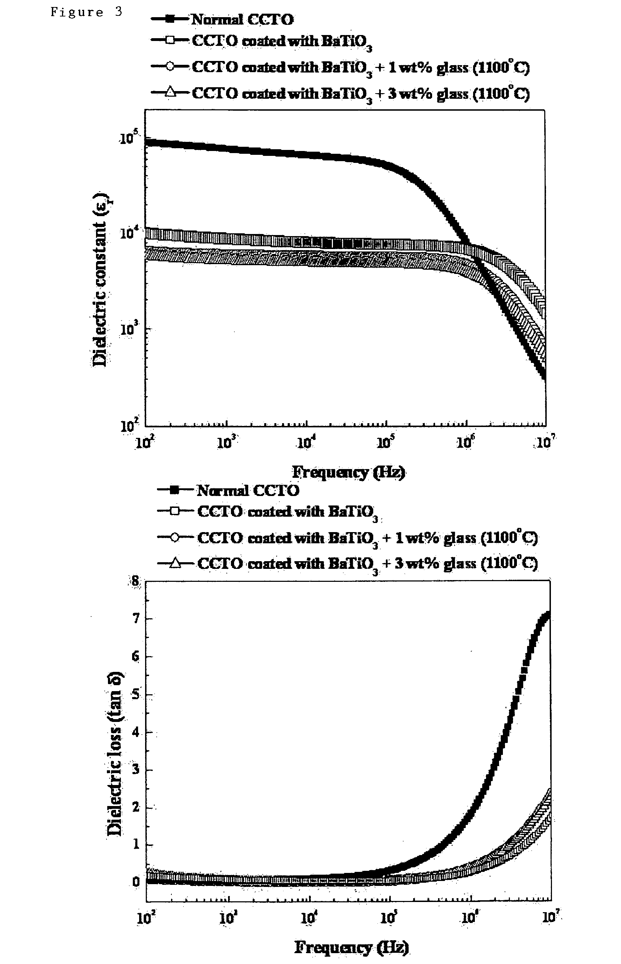

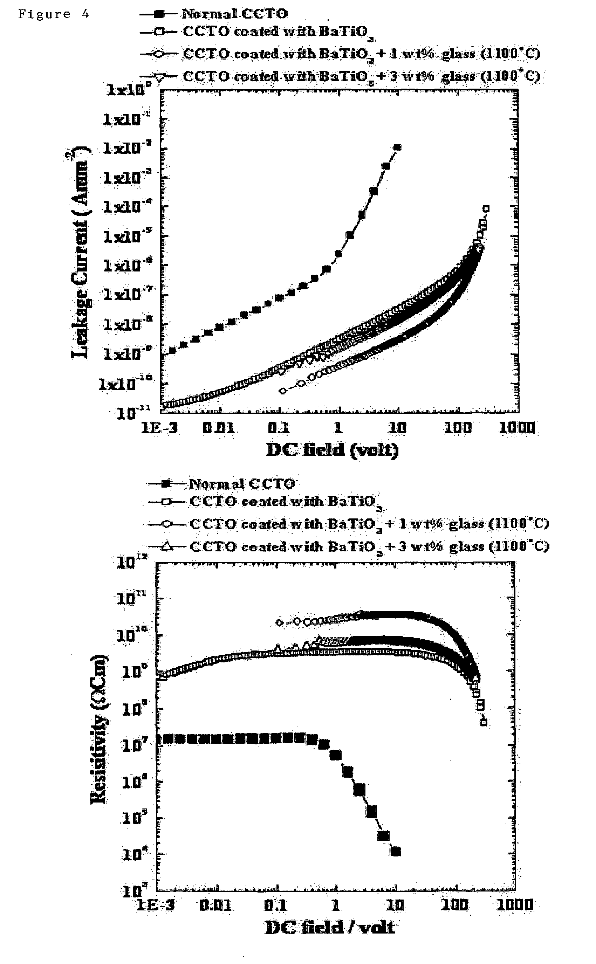

After the sintering, silver paste was applied on the opposite sides of each sintered material, and the silver pasted sintered materials were heated up to at a rate of 5 □/min, followed by baking at 600□. The dielectric properties (Fig. 3) and the leakage current and resistivity under a DC field (Fig. 4) were measured.

### Example 3. Preparation of core-shell structured CaCu₃Ti₄O₁₂-CaTiO₃ and a sintered material of core-shell structured CaCu₃Ti₄O₁₂-CaTiO₃ with glass phase added

0.205 ml of Ti[OCH(CH₃)₂]₄ and 0.22 ml of acetylacetone (C₅H₈O₂) were added into a beaker. 0.212 g of (C₂H₃O₂)₂Ca solution was added into the beaker and then the mixture was stirred with addition of 100 ml of acetic acid until the (C₂H₃O₂)₂Ca was completely dissolved, followed by stirring with addition of 10 g of CaCu₃Ti₄O₁₂ powder for about 1 hour. Then, the mixture solution was stirred at 80 rpm to 200 rpm until the acetic acid was completely evaporated. The thus obtained dried powders in alumina crucibles were introduced into an electric furnace and heated up to at a rate of 1.5 □/min, followed by heat treatment at 1,100□ for 12 hours.

The heat-treated powders were ground in a mortar and sieved, and then were added by the glass prepared in Example 1 so as for the glass concentrations to be 1 wt% and 3 wt%, respectively, followed by sintering in order to measure the electrical properties. The sintering procedure was carried out by adding 1.2 g of the powders into a disk-shaped 15Φ mold, and then usniaxially pressing thereof, followed by cold isostatic press at 150 MPa. The thus obtained compacts were heated up to 1,100□ in an electric furnace at a rate of 5 □/min and, then, were sintered at 1,100□.

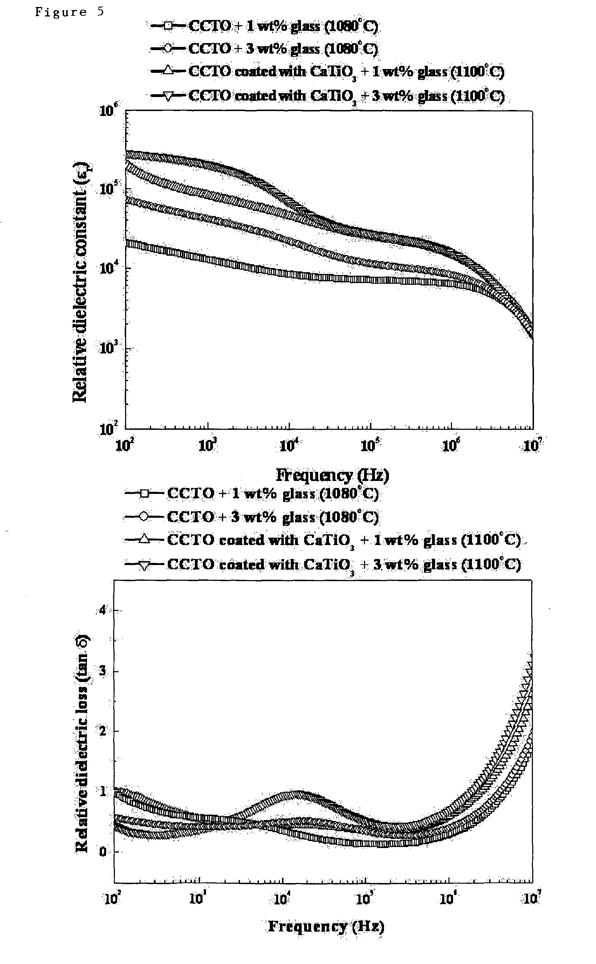

After the sintering, silver paste was applied on the opposite sides of each sintered material, and the silver pasted sintered materials were heated up to at a rate of 5 □/min, followed by baking at 600□. The relative dielectric constant and relative dielectric loss with frequency of the sintered materials were measured (Fig. 5).

### Example 4. Preparation of core-shell structured CaCu₃Ti₄O₁₂-SrTiO₃ and a sintered material of core-shell structured CaCu₃Ti₄O₁₂-SrTiO₃ with glass phase added

0.205 ml of Ti[OCH(CH₃)₂]₄ and 0.22 ml of acetylacetone (C₅H₈O₂) were added into a beaker. 0.140 g of (C₂H₃O₂)₂Sr solution was added into the beaker and then the mixture was stirred with addition of 100 ml of acetic acid until the (C₂H₃O₂)₂Sr was completely dissolved, followed by stirring with addition of 10 g of CaCu₃Ti₄O₁₂ powder for about 1 hour. Then, the mixture solution was stirred at 80 rpm to 200 rpm until the acetic acid was completely evaporated. The thus obtained dried powders in alumina crucibles were introduced into an electric furnace and heated up to at a rate of 1.5 □/min, followed by heat treatment at 1,1000 for 12 hours.

The heat-treated powders were ground in a mortar and sieved, and then were added by the glass prepared in Example 1 so as for the glass concentrations to be 1 wt% and 3 wt%, respectively, followed by sintering in order to measure the electrical properties. The sintering procedure was carried out by adding 1.2 g of the powders into a disk-shaped 15Φ mold, and then usniaxially pressing thereof, followed by cold isostatic press at 150 MPa. The thus obtained compacts were heated up to 1,100□ in an electric furnace at a rate of 5 □/min and, then, were sintered at 1,100□. After the sintering, silver paste was applied on the opposite sides of each sintered material, and the silver pasted sintered materials were heated up to at a rate of 5 □/min, followed by baking at 600□.

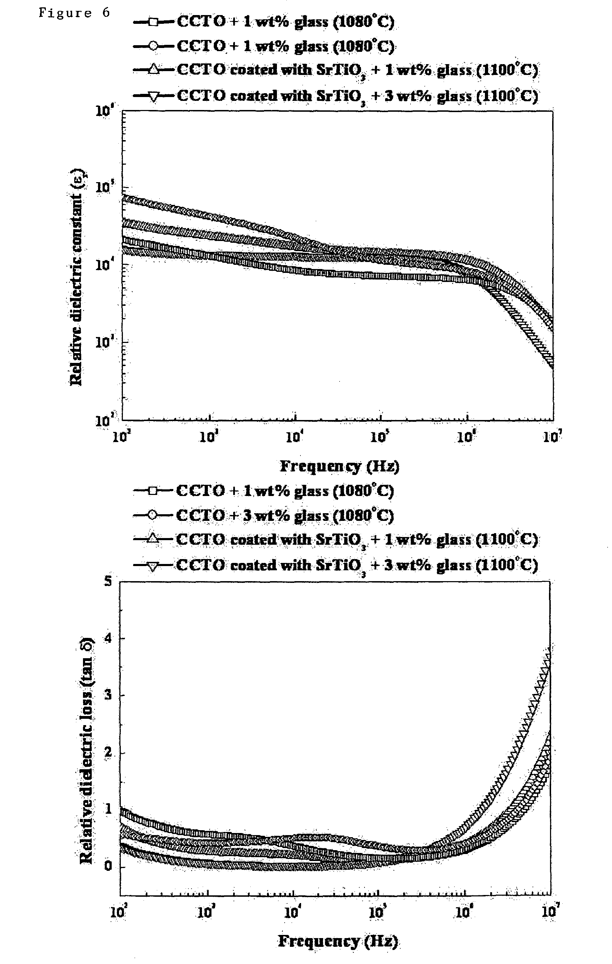

The relative dielectric constant and relative dielectric loss with frequency of the sintered materials were measured (Fig. 6).

### Example 5. Preparation of core-shell structure CaCu₃Ti₄O₁₂-MgTiO₃ and a sintered material of core-shell structured CaCu₃Ti₄O₁₂-MgTiO₃ with glass phase added

0.205 ml of Ti[OCH(CH₃)₂]₄ and 0.22 ml of acetylacetone (C₅H₈O₂) were added into a beaker. 0.145 g of (C₂H₃O₂)₂·2Mg·4H₂O solution was added into the beaker and then the mixture was stirred with addition of 100 ml of acetic acid until the (C₂H₃O₂)₂·2Mg·4H₂O was completely dissolved, followed by stirring with addition of 10 g of' CaCu₃Ti₄O₁₂ powder for about 1 hour. Then, the mixture solution was stirred at 80 rpm to 200 rpm until the acetic acid was completely evaporated. The thus obtained dried powders in alumina crucibles were introduced into an electric furnace and heated up to at a rate of 1.5 □/min, followed by heat treatment at 1,100□ for 1.2 hours.

The heat-treated powders were ground in a mortar and sieved, and then were added by the glass prepared in Example 1 so as for the glass concentrations to be 1 wt% and 3 wt%, respectively, followed by sintering in order to measure the electrical properties. The sintering procedure was carried out by adding 1.2 g of the powders into a disk-shaped 15Φ mold, and then usniaxially pressing thereof, followed by cold isostatic press at 150 MPa. The thus obtained compacts were heated up to 1,100□ in an electric furnace at a rate of 5 □/min and, then, were sintered at 1,100□. After the sintering, silver paste was applied on the opposite sides of each sintered material, and the silver pasted sintered materials were heated up to at a rate of 5 □/min, followed by baking at 600□.

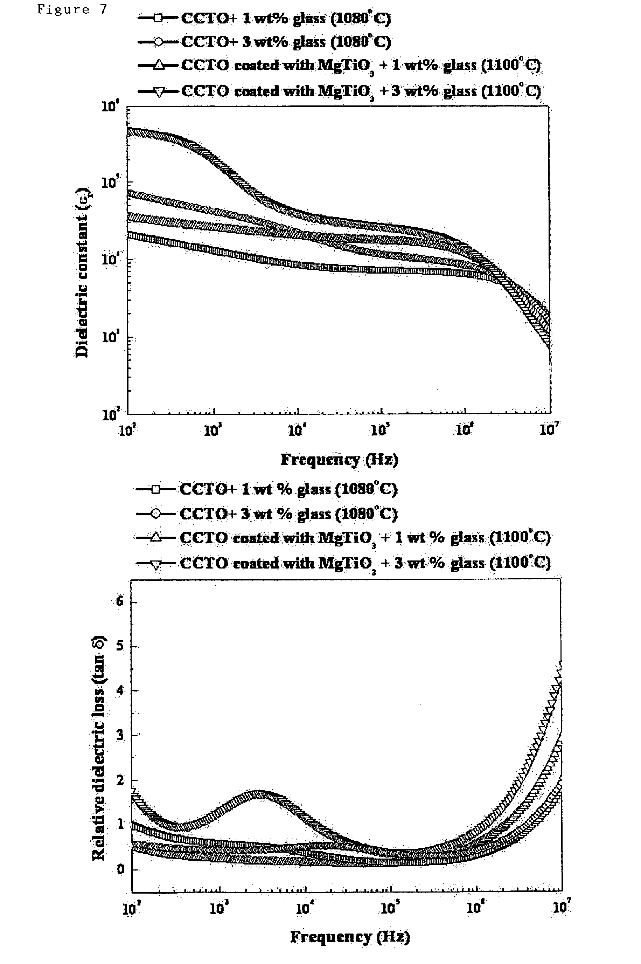

The relative dielectric constant and relative dielectric loss with frequency of the sintered materials were measured (Fig. 7).

### Example 6. Preparation of core-shell structure CaCu₃Ti₄O₁₂-MgO and a sintered material of core-shell structured CaCu₃Ti₄O₁₂-MgO with glass phase added

0.145 g of (C₂H₃O₂)₂Mg was added into a beaker and then was stirred with addition of 100 ml of anhydrous methanol until the (C₂H₃O₂)₂Mg was completely dissolved, followed by stirring with addition of 10 g of CaCu₃Ti₄O₁₂ powder for about 1 hour. Then, the mixture solution was stirred at 80 rpm to 200 rpm until the anhydrous methanol was completely evaporated. The thus obtained dried powders in alumina crucibles were introduced into an electric furnace and heated up to at a rate of 1.5 □/min, followed by heat treatment at 1,100□ for 12 hours.

The heat-treated powders were ground in a mortar and sieved, and then were added by the glass prepared in Example 1 so as for the glass concentrations to be 1 wt% and 3 wt%, respectively, followed by sintering in order to measure the electrical properties. The sintering procedure was carried out by adding 1.2 g of the powders into a disk-shaped 15Φ mold, and then usniaxially pressing thereof, followed by cold isostatic press at 150 MPa. The thus obtained compacts were heated up to 1,100□ in an electric furnace at a rate of 5 □/min and, then, were sintered at 1,100□. After the sintering, silver paste was applied on the opposite sides of each sintered material, and the silver pasted sintered materials were heated up to at a rate of 5 □/min, followed by baking at 600□.

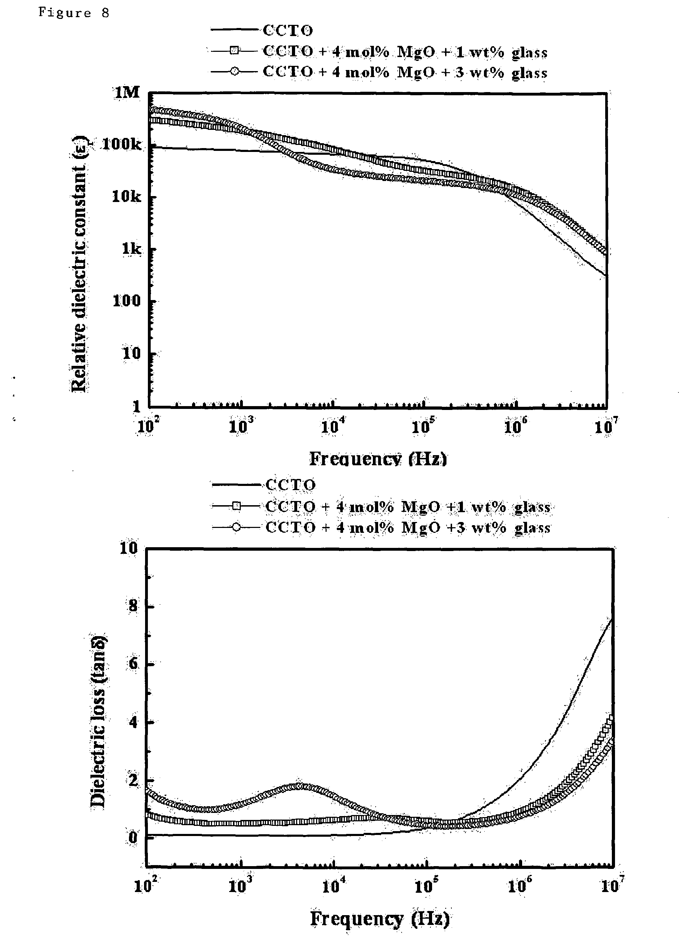

The relative dielectric constant and relative dielectric loss with frequency of the sintered materials were measured (Fig. 8).

### Example 7. Preparation of core-shell structured CaCu₃Ti₄O₁₂-Al₂O₃ and a sintered material of core-shell structured CaCu₃Ti₄O₁₂-Al₂O₃ with glass phase added

0.191 g of (C₂H₃O₂)₂Al was added into a beaker and then was stirred with addition of 100 ml of anhydrous methanol until the (C₂H₃O₂)₂Al was completely dissolved, followed by stirring with addition of 10 g of CaCu₃Ti₄O₁₂ powder for about 1 hour. Then, the mixture solution was stirred at 80 rpm to 200 rpm until the anhydrous methanol was completely evaporated. The thus obtained dried powders in alumina crucibles were introduced into an electric furnace and heated up to at a rate of 1.5 □/min, followed by heat treatment at 1,100□ for 12 hours.

The heat-treated powders were ground in a mortar and sieved, and then were added by the glass prepared in Example 1 so as for the glass concentrations to be 1 wt% and 3 wt%, respectively, followed by sintering in order to measure the electrical properties. The sintering procedure was carried out by adding 1.2 g of the powders into a disk-shaped 15Φ mold, and then usniaxially pressing thereof, followed by cold isostatic press at 150 MPa. The thus obtained compacts were heated up to 1,100□ in an electric furnace at a rate of 5 □/min and, then, were sintered at 1,100□. After the sintering, silver paste was applied on the opposite sides of each sintered material, and the silver pasted sintered materials were heated up to at a rate of 5 □/min, followed by baking at 600□.

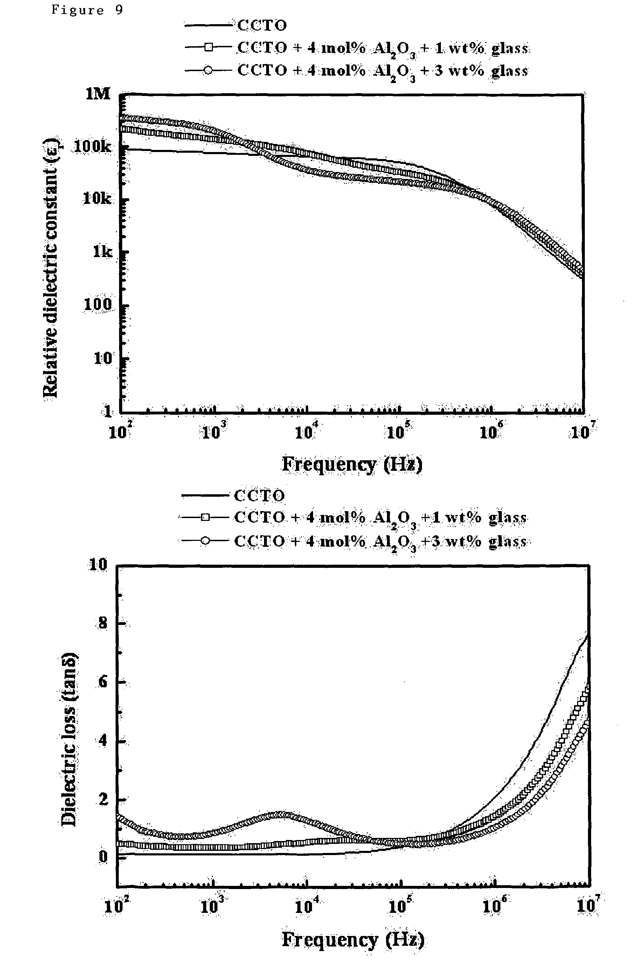

The relative dielectric constant and relative dielectric loss with frequency of the sintered materials were measured (Fig. 9).

### Example 8. Preparation of core-shell structured CaCu₃Ti₄O₁₂-TiO₂ and a sintered material of core-shell structured CaCu₃Ti₄O₁₂-TiO₂ with glass phase added

0.205 ml of Ti[OCH(CH₃)₂]₄ and 0.22 ml of acetylacetone (C₅H₈O₂) were added into a beaker, and then the mixture was stirred with addition of 100 ml of anhydrous methanol until the Ti[OCH(CH₃)₂]₄ was completely dissolved, Thereafter, the solution was stirred with addition of 10 g of CaCu₃Ti₄O₁₂ powder for about 1 hour. Then, the mixture solution was stirred at 80 rpm to 200 rpm until the anhydrous methanol was completely evaporated. The thus obtained dried powders in alumina crucibles were introduced into an electric furnace and heated up to at a rate of 1.5 □/min, followed by heat treatment at 1,100□ for 12 hours.

The heat-treated powders were ground in a mortar and sieved, and then were added by the glass prepared in Example 1 so as for the glass concentrations to be 1 wt% and 3 wt%, respectively, followed by sintering in order to measure the electrical properties. The sintering procedure was carried out by adding 1.2 g of the powders into a disk-shaped 15Φ mold, and then usniaxially pressing thereof, followed by cold isostatic press at 150 MPa. The thus obtained compacts were heated up to 1,100□ in an electric furnace at a rate of 5 □/min and, then, were sintered at 1,100□. After the sintering, silver paste was applied on the opposite sides of each sintered material, and the silver pasted sintered materials were heated up to at a rate of 5 □/min, followed by baking at 600□.

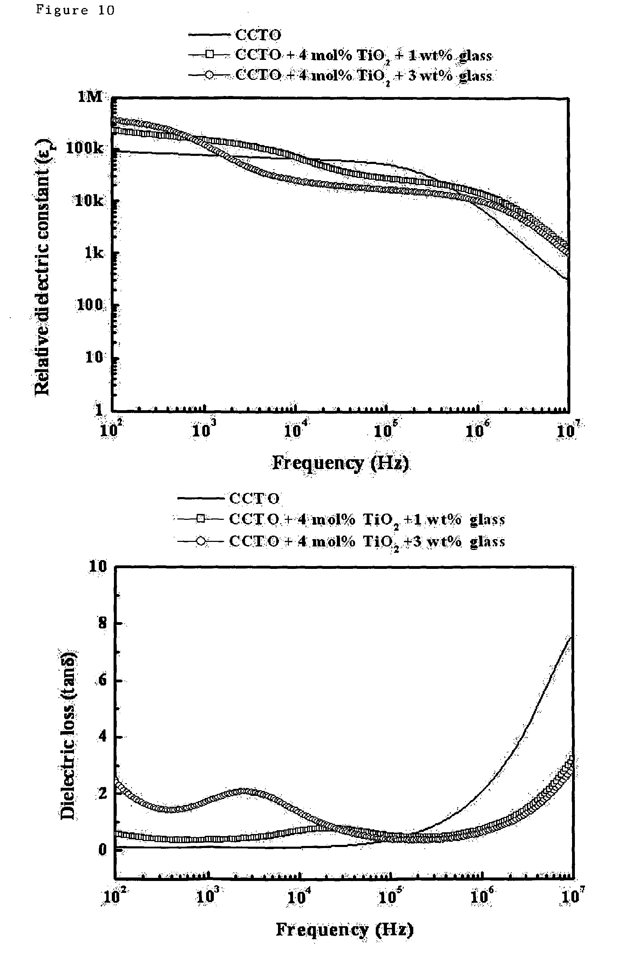

The relative dielectric constant and relative dielectric loss with frequency of the sintered materials were measured (Fig. 10).

### Example 9. Preparation of core-shell structured CaCu₃Ti₄O₁₂-HfO₂ and a sintered material of core-shell structured CaCu₃Ti₄O₁₂-HfO₂ with glass phase added

0.191 g of HfCl₄ was added into a beaker and then was stirred with addition of 100 ml of anhydrous methanol until the HfCl₄ was completely dissolved, followed by stirring with addition of 10 g of CaCu₃Ti₄O₁₂ powder for about 1 hour. Then, the mixture solution was stirred at 80 rpm to 200 rpm until the anhydrous methanol was completely evaporated. The thus obtained dried powders in alumina crucibles were introduced into an electric furnace and heated up to at a rate of 1.5 □/min, followed by heat treatment at 1,100□ for 12 hours.

The heat-treated powders were ground in a mortar and sieved, and then were added by the glass prepared in Example 1 so as for the glass concentrations to be 1 wt% and 3 wt%, respectively, followed by sintering in order to measure the electrical properties. The sintering procedure was carried out by adding 1.2 g of the powders into a disk-shaped 15Φ mold, and then usniaxially pressing thereof, followed by cold isostatic press at 150 MPa. The thus obtained compacts were heated up to 1,100□ in an electric furnace at a rate of 5 □/min and, then, were sintered at 1,100□. After the sintering, silver paste was applied on the opposite sides of each sintered material, and the silver pasted sintered materials were heated up to at a rate of 5 □/min, followed by baking at 600□.

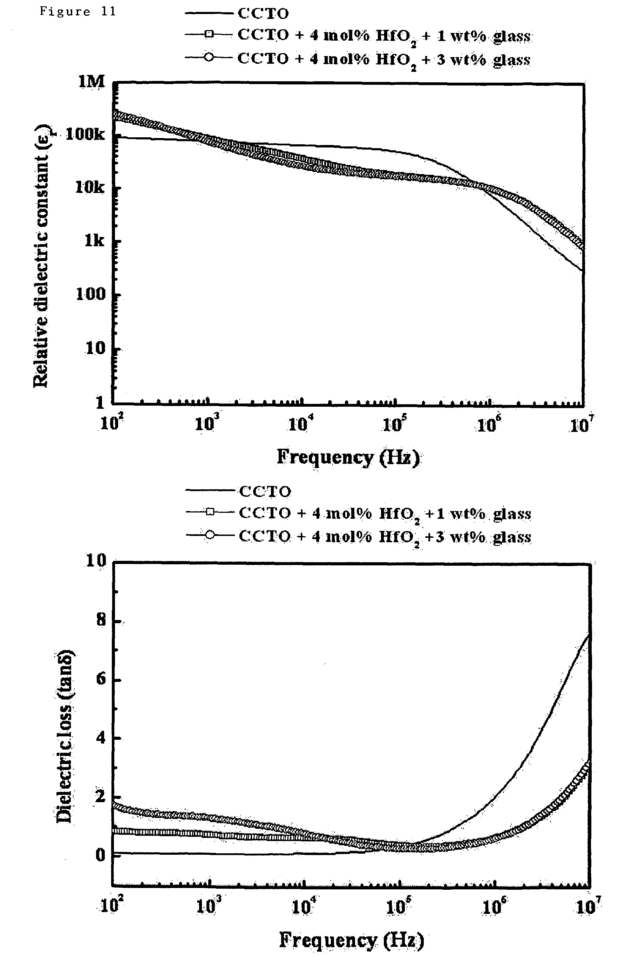

The relative dielectric constant and relative dielectric loss with frequency of the sintered materials were measured (Fig. 11).

## Claims

1. A sintered material for a dielectric substance, comprising a dispersed phase made of one selected from the group consisting of NiO doped with Li and Ti, NiO doped with Li and Al, CuO, ACu₃Ti₄O₁₂ with Perovskite structure and RE_{2-y}A⁻_{y}NiO₄, and a continuous phase made of a sintering aid,
wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2};
0<x<1;
RE is La, Pr, Nd, Sm, Eu, Gd or Ce;
A' is Ca, Sr or Ba; and
0<y<2.

2. The sintered material of Claim 1, wherein said sintering aid is glass.

3. The sintered material of' Claim 2, wherein said glass is BaO-B₂O₃-SiO₂.

4. A process for preparing a sintered material for a dielectric substance comprising, sintering a mixture of' a powder selected from the group consisting of NiO doped with Li and Ti, NiO doped with Li and Al, CuO, ACu₃Ti₄O₁₂ with Perovskite structure and RE_{2-y}A⁻_{y}NiO₄, and a powder of a sintering aid,
wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, Ho_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2};
O<x<1;
RE is La, Pr, Nd, Sm, Eu, Gd or Ce;
A' is Ca, Sr or Ba; and
0<y<2.

5. The process of Claim 4, wherein said sintering aid is glass.

6. The process of Claim 5, wherein said glass is BaO-B₂O₃-SiO₂.

7. The process of Claim 6, wherein a temperature of sintering is 900□ to 1,200□.

8. A sintered material for a dielectric substance, comprising a core-shell microstructure including a core of a first material and a shell of' a second material, wherein a relative dielectric constant of said first material is larger than that of said second material.

9. The sintered material of Claim 8, wherein a difference between the relative dielectric constant of said first material and the relative dielectric constant of said second material is equal to or more than 1,000 at 25□.

10. The sintered material of Claim 8, wherein a difference between the relative dielectric constant of said first material and the relative dielectric constant of said second material is equal to or more than 3,000 at 25□.

11. The sintered material of Claim 8, wherein a difference between the relative dielectric constant of said first material and the relative dielectric constant of said second material is equal to or more than 5,000 at 25□.

12. The sintered material of Claim 8, wherein said first material is selected from the group consisting of NiO doped with Li and Ti, NiO doped with Li and Al, CuO, ACu₃Ti₄O₁₂ with Perovskite structure and RE_{2-y}A⁻_{y}NiO₄,
wherein A is Ca, Sr, Ca₁₋ₓSrₓ, Sr₁₋ₓBaₓ, Ca₁₋ₓBaₓ, SC_{2/3}, Y_{2/3}, La_{2/3}, Ce_{2/3}, Pr_{2/3}, Nd_{2/3}, Pm_{2/3}, Sm_{2/3}, Eu_{2/3}, Gd_{2/3}, Tb_{2/3}, Dy_{2/3}, HO_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2};
0<x<1;
RE is La, Pr, Nd, Sm, Eu, Gd or Ce; A' is Ca, Sr or Ba; and
0<y<2.

13. The sintered material of Claim 8, wherein said second material is selected from the group consisting of A TiO₃, Al₂O₃, HfO₂, TiO0₂, MgO, SiO₂ and LaLuO₃,
wherein A⁺ is Mg, Ca, Sr, Ba, Mg₁₋ₓCaₓ, Mg₁₋ₓSrₓ, Mg₁₋xBaₓ, Ca₁₋ₓSrₓ, Sr₁-ₓBaₓ or Ca₁₋ₓBaₓ; and
0<x<1.

14. The sintered material of Claim 8, wherein said shell further comprises a sintering aid.

15. The sintered material of Claim 14, wherein said sintering aid is glass.

16. The sintered material of Claim 15, wherein said glass is BaO-B₂O₃-SiO₂.

17. A process for preparing a sintered material for a dielectric substance, which has a core-shell microstructure, comprising:
i) mixing a powder of a first material and a coating composition to coat said powder of said first material;
ii) drying a mixture obtained from said step i);
iii) calcinating the dried mixture of said step ii) to form a shell of a second material on a core of said first material; and
iv) sintering the precursor powder for sintering obtained from said step iii).

18. The process of Claim 17, wherein said first material is selected from the group consisting of NiO doped with Li and Ti, NiO doped with Li and Al, CuO, ACu₃Ti₄O₁₂ with Perovskite structure and RE_{2-y}A˙_{y}NiO₄,
wherein A is Ca, Sr, Ca₁₋ₓSrₓ, Sr₁₋ₓBaₓ, Ca₁₋ₓBaₓ, Sc_{2/3}, Y_{2/3}, La_{2/3}, Ce_{2/3}, Pr_{2/3}, Nd_{2/3}, Pm_{2/3}, Sm_{2/3,} Eu_{2/3}, Gd_{2/3}, Tb_{2/3}, Dy_{2/3}, HO_{2/3}, Er_{2/3}, Tm_{2/3}, Yb_{2/3}, Lu_{2/3}, Na_{1/2}La_{1/2}, Na_{1/2}Sm_{1/2}, Na_{1/2}Gd_{1/2}, Na_{1/2}Dy_{1/2}, Na_{1/2}Yb_{1/2}, Na_{1/2}Y_{1/2} or Na_{1/2}Bi_{1/2};
0<x<1;
RE is La, Pr, Nd, Sm, Eu, Gd or Ce;
A' is Ca, Sr or Ba; and
0<y<2.

19. The process of Claim 17, wherein said coating composition is a mixture of titanium isopropoxide and at least one selected from Mg(CH₃COO)₂, Ca(CH₃COO)₂, Sr(CH₃COO)₂, Ba(CH₃COO)₂, Mg(C₅H₇O₂)₂, Ca(C₅H₇O₂)₂, Sr(C₅H₇O₂)₂ and Ba(CsH₇O₂)₂ when said shell is made of A TiO₃,
wherein A' is Ca, Sr, Ba, Mg₁₋ₓCaₓ, Mg₁₋ₓSr_{x,} Mg₁₋ₓBaₓ, Ca₁₋ₓSrₓ, Sr₁₋ₓBaₓ or Ca₁₋ₓBaₓ; and
0<x<1.

20. The process of Claim 17, wherein said coating composition is a mixture of ethanol and at least one selected from Mg(CH₃COO)₂, Ca(CH₃COO)₂, Sr(CH₃COO)₂, Ba(CH₃COO)₂, HfCl₄ and Al(CH₃COO)₂ when said shell is made of a single-metal oxide excluding TiO₂,

21. The process of Claim 17, wherein said coating composition is a mixture of titanium isopropoxide and ethanol when said shell is made of TiO₂.

22. The process of Claim 17, wherein said precursor powder for sintering further comprises a sintering aid in said step iv).

23. The process of Claim 22, wherein said sintering aid is glass.

24. The process of Claim 23, wherein said glass is BaO-B₂O₃-SiO₂.

25. The process of Claim 17, wherein the drying of said step ii) is carried out by drying said mixture obtained from said step i) through heating said mixture at 80□ to 100□.

26. The process of Claim 17, wherein the drying of said step ii) is carried out by a spray drying.

27. The process of Claim 17, wherein the temperature of calcinating of said step iii) is between 1,000□ to 1,150□.

28. The process of Claim 17, wherein the temperature of' sintering of said step iv) is between 900□ to 1,200□.
